(19) Europäisches Patentamt
European Patent Office
Office européen des brevets

(11) **EP 2 591 557 B1**

(12) **EUROPÄISCHE PATENTSCHRIFT**

(45) Veröffentlichungstag und Bekanntmachung des Hinweises auf die Patenterteilung:
**12.12.2018 Patentblatt 2018/50**

(21) Anmeldenummer: **11746163.2**

(22) Anmeldetag: **08.07.2011**

(51) Int Cl.:
*H04B 1/16* *(2006.01)*          *H04W 52/02* *(2009.01)*

(86) Internationale Anmeldenummer:
**PCT/EP2011/003566**

(87) Internationale Veröffentlichungsnummer:
**WO 2012/004011 (12.01.2012 Gazette 2012/02)**

(54) **STROMSPARENDE EMPFÄNGERANORDNUNG ZUM DRAHTLOSEN EMPFANG VON DATEN**

ENERGY-SAVING RECEIVER ASSEMBLY FOR THE WIRELESS RECEPTION OF DATA

SYSTÈME DE RÉCEPTION BASSE CONSOMMATION POUR LA RÉCEPTION SANS FIL DE DONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2010 DE 102010027019**

(43) Veröffentlichungstag der Anmeldung:
**15.05.2013 Patentblatt 2013/20**

(73) Patentinhaber: **Fraunhofer-Gesellschaft zur Förderung der angewandten Forschung e.V. 80686 München (DE)**

(72) Erfinder:
• OEHLER, Frank
  **91325 Adelsdorf (DE)**
• MILOSIU, Heinrich
  **91056 Erlangen (DE)**

(74) Vertreter: **Pfenning, Meinig & Partner mbB Patent- und Rechtsanwälte Joachimsthaler Straße 10-12 10719 Berlin (DE)**

(56) Entgegenhaltungen:
**EP-A2- 1 944 873          GB-A- 2 455 771
US-A1- 2002 173 289     US-A1- 2008 108 318
US-A1- 2009 168 843**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Empfängeranordnung zum drahtlosen Empfang von Daten nach dem Oberbegriff des Hauptanspruchs.

In vielen technischen Gebieten sind stromsparende Empfänger im Einsatz. Beispielsweise sind derartige Empfänger für die Überwachung von Objekten im Einsatz und können Bestandteil eines Systems aus sogenannten Funkknoten oder Sensorknoten sein. Bekannte stromsparende Empfänger, die beispielsweise als Superregenerativ- oder Detektorempfänger realisiert sind, haben Stromaufnahmen, die bei einigen hundert Mikroampere liegen, und ihre Empfindlichkeit ist moderat bis niedrig. Solche Empfänger sind insbesondere für eine Kommunikation mit niedrigen Datenraten, z. B. Datenraten < 10 kbps geeignet.

Aus der US 2008/0108318 A1 ist ein sogenannter Aufweck-Empfänger bekannt, der als abtastender Empfänger ausgebildet ist, d. h., der Empfänger wird von einer Steuereinheit mit konstanter Abtastrate ein- und ausgeschaltet, wobei das Empfangssignal während des Abtastimpulses an einen digitalen Empfänger weitergeliefert wird, der eine Datenfolge erzeugt. Wenn die Datenfolge einem vorgegebenen Aufwecksignal entspricht, wird ein Hauptempfänger eingeschaltet. Nach dem dort angegebenen Beispiel beträgt die Einschaltzeit 2 $\mu$s, und die Abtastperiode ist 50 $\mu$s (20 kHz). Der Stromverbrauch des bekannten Empfängers im dauernd eingeschalteten Zustand kann beispielsweise mit 10 mA angenommen werden, was der übliche Stromverbrauch kommerzieller Empfängerschaltungen ist. Der mittlere Stromverbrauch ergibt sich somit zu 400 $\mu$A, der jedoch noch zu viel Energie verbraucht, um einen jahrelangen Batteriebetrieb zu ermöglichen. Mit einer Lithiumknopfzelle CR 2032 (210 mAh Ladung) kann somit eine maximale Betriebsdauer von 20 Tagen erreicht werden.

GB 2 455 771 A betrifft ein Funkknotennetz, wobei ein Knoten zwischen mehreren Betriebszyklen abhängig von dem Detektieren eines Ereignisses umschalten kann. Der das Ereignis detektierende Knoten schaltet in den höchsten Betriebszyklus und sendet Signale an benachbarte Knoten, die Informationen enthalten, mit welchem Betriebszyklus diese Knoten arbeiten sollen, wobei die Entscheidung vom Ort in einem Bereich des Netzes, an dem das Ereignis detektiert wurde, abhängig ist.

US 2002/0173289 A1 beschreibt einen Empfänger im Auto, z.B. zum Entriegeln von Türen, der mit zwei Betriebszyklen angesteuert wird, wobei die Entscheidung abhängig ist, über welchen Zeitraum keine Signale empfangen wurden. Wenn ein Signal kommt, wird der Empfänger voll eingeschaltet und verwendet keinen Betriebszyklus.

In der EP 1 944 873 A2 ist ein FM-Empfänger offenbart, der im Stand-by-Modus und im normalen Modus arbeitet. Beide Betriebszyklen arbeiten mit derselben Frequenz, wobei für den einen Zyklus ein unterschiedliches Tastverhältnis zu dem anderen Zyklus verwendet wird.

US 2009/0168843 A1 betrifft ein GPS-System mit einer Schaltungsanordnung, die einen mehrere Empfänger verfolgenden Empfängerkreis, der ausgebildet ist, eine kohärente Summation durchzuführen und einen Steuerkreis einschließt, der zur Energiesparung den Empfängerkreis mit unterschiedlichen Betriebszyklen ansteuert. Die Steuerung der Betriebszyklen ist von den Perioden der kohärenten Summation abhängig.

Der Erfindung liegt daher die Aufgabe zugrunde, eine stromsparende Empfängeranordnung zum drahtlosen Empfang von Daten, insbesondere von Daten mit niedriger Bitrate (< 10 kbps) zu schaffen, die einfach im Aufbau gehalten ist und die Versorgungsströme < 10 $\mu$A aufweist, so dass ein Batteriebetrieb über mehrere Jahre möglich ist.

Diese Aufgabe wird erfindungsgemäß durch die kennzeichnenden Merkmale des Hauptanspruchs in Verbindung mit den Merkmalen des Oberbegriffs gelöst.

Durch die in den Unteransprüchen angegebenen Maßnahmen sind vorteilhafte Weiterbildungen und Verbesserungen möglich.

Erfindungsgemäß ist eine Empfängeranordnung zum drahtlosen Empfang von Daten, beispielsweise mit einer Bitrate von kleiner als 10kbps vorgesehen, die auf ein Trägersignal aufmoduliert sind. Die Empfängeranordnung ist mit einem analogen Empfänger, einer Auswertevorrichtung und einer Steuervorrichtung ausgerüstet, wobei die Steuervorrichtung den Empfänger mittels Abtastimpulsen derart ansteuert, dass er während der Abtastimpulse aktiviert, d.h. eingeschaltet und bereit zum Empfang von Sendesignalen ist und während der Abtastpausen deaktiviert, d.h. ausgeschaltet ist und keine Sendesignale empfängt, und die Auswertevorrichtung aus den von dem Empfänger während der Abtastimpulse gelieferten Empfangssignalen eine Datenbitfolge erzeugt. Die Abtastung der Datenbits geschieht direkt durch kurzes Einschalten des gesamten Empfängers, damit ist der Empfänger tatsächlich nur während des kurzen Abtastintervalls an.

Dadurch, dass die bei der Empfängeranordnung verwendete Steuervorrichtung zur Abtastung des analogen Empfängers ausgebildet ist und den Empfänger bzw. die Ansteuerung des Ein- und Ausschaltens des Empfängers zwischen Phasen der Abtastimpulse mit unterschiedlichen Abtastfrequenzbereichen abhängig von mindestens einem vorgegebenen Umschaltkriterium umzuschalten, ist es möglich, eine adaptive Anpassung der Abtastung an die Art der versendeten Daten, die auf ein Trägersignal aufmoduliert sind, vorzunehmen. Das bedeutet, dass in einem sogenannten "Vor-Hör-Modus" eine langsame Abtastung bzw. ein langsames Sampling vorgenommen werden kann, d. h., es wird in den Kanal "hineingehört", ob ein Signal geliefert wird, das als Umschaltkriterium anzeigt, dass Nutzdaten zu erwarten sind.

Die Auswertevorrichtung kann erfindungsgemäß die Auswertung sampleweise und nicht paketweise vorgenommen, d.h. der durch das Ein- und Ausschalten des Empfängers, was später auch als Einschaltperiode bezeichnet wird, über die Abtastimpulse erzeugte Datenbitstrom wird unmittelbar "mitgelesen" und es kann auf ein Sample oder Abtastwert reagiert werden.

Mit der erfindungsgemäßen Empfängeranordnung ist aufgrund der sogenannten "adaptiven Anpassung" eine stromsparende Implementierung des Empfängers mit Versorgungsströmen weit unterhalb von 10 pA möglich. Dies erlaubt die einfache Verwendung von Solarzellen, thermoelektrischen Generatoren oder Mikrovibrationswandlern mit u. a. Energy-Harvesting-Generatoren als Stromversorgung durch die sogar ein batterieloser Betrieb möglich ist. Durch den sehr niedrigen Stromverbrauch können diese Generatoren mit deutlich geringeren Abmessungen (z.B. Solarzellenfläche von 1 cm$^2$ für 1 $\mu$A Stromverbrauch) ausgeführt werden, als für eine Stromversorgung von Empfängeranordnungen nach dem Stand der Technik mit Stromverbräuchen um 10 mA erforderlich ist. Daneben eignen sich auch Knopfzellenbatterien mit niedriger Selbstentladung, z. B. Lithium-Knopfzellen, als Stromversorgung. Die Empfängeranordnung ist sehr einfach gehalten, und es werden keine komplexen Schaltungen und aufwendigen Modulationstechniken verwendet.

Die Empfängeranordnung basiert auf einem abtastend betriebenen Funkempfänger, der in Abständen den Funkkanal ständig abtastet. Der analoge Empfänger arbeitet prinzipiell mit Amplitudenumtastung, z. B. ON-OFF-Keying. Die Abtastung des Empfangssignals erfolgt so, dass mehrere Abtastwerte pro gesendetem bzw. empfangenem Bit genommen werden, wodurch keine Abtastung der Hochfrequenz durchgeführt wird, sondern im Prinzip eine Abtastung der Einhüllenden des Modulierten Trägersignals, was letztendlich einer digitalen Abtastung der demodulierten Datenbits entspricht. Dies gilt für alle Phasen mit unterschiedlichen Abtastfrequenzbereichen.

Vorzugsweise weist der analoge Empfänger Komponenten auf, die schnell eingeschwungen sind (fast-settling components), z. B. eine Einschwingzeit ab dem Einschaltzeitpunkt von weniger als 100 ns haben. Grundsätzlich bedeutet "schnell einschwingend", dass die Einschwingzeit mindestens vier Größenordnungen schneller als ein gesendetes Datenbit dauert, wobei die Daten vorzugsweise mit einer Bitrate kleiner oder gleich 10 kbps gesendet werden. Für die unterschiedlichen Phasen der Abtastfrequenz des Empfängers sind auch unterschiedliche gesendete Datenbitraten denkbar, beispielsweise in der einen Phase < 1 kbps und bei der anderen Phase beispielsweise zwischen 10 kbps und 1 kbps.

Vorteilhafterweise ist das Umschaltkriterium mindestens eine vorgegebene Datensequenz, beispielsweise eine Folge von Einsen, z.B. "11111111", die der eigentlichen Nutzdatenübertragung vorangestellt ist. Dabei ist die Datensequenz in der Auswertevorrichtung, die Mittel zum Erkennen der vorgegebenen Datensequenz umfasst, gespeichert, wobei diese Mittel bei Übereinstimmung der empfangenen Datenbitfolge mit der vorgegebenen Datensequenz an die Steuervorrichtung ein Umschaltsignal zum Wechseln von einer Phase in eine weitere Phase, jeweils mit unterschiedlichen Abtastfrequenzen, liefert. Diese Übereinstimmung des Umschaltkriteriums kann auch als erkannt gelten, wenn der Empfänger eine geringere Anzahl von Einsen detektiert, z.B. 7 von 8 Einsen oder weniger. Es muss demnach keine exakte Übereinstimmung vorausgesetzt werden, sondern nur eine hinreichend gute Korrelation. Die Mittel zur Erkennung der Datensequenz sind vorzugsweise als Vergleichsvorrichtung, z.B. als Korrelator und/oder als Schieberegister mit Digitalvergleicher ausgebildet.

Vorteilhafterweise sind mehrere vorgegebene Datensequenzen gespeichert, so dass zwischen mehr als zwei Phasen mithilfe von Datensequenzen umgeschaltet werden kann. Allerdings kann auch eine Datensequenz als Umschaltkriterium vorgesehen sein, die ein Zurückschalten in eine erste Phase nach dem vollständigen Empfang von Daten initiiert.

Als Umschaltkriterium kann in einem weiteren Ausführungsbeispiel auch eine vorgegebene Zeitdauer verwendet werden, die von der Auswertevorrichtung oder der Steuervorrichtung vorgebbar ist und das Umschaltsignal zwischen mindestens zwei Phasen auslöst. Es ist somit denkbar, dass als Umschaltkriterien zwischen mehreren Empfangsphasen mit unterschiedlichen Abtastfrequenzen sowohl mindestens eine vorgegebene Datensequenz als auch eine vorgegebene Zeitdauer verwendet werden.

In einem besonders bevorzugten Ausführungsbeispiel ist die Empfängeranordnung dazu eingerichtet, eine erste Empfangsphase mit einem ersten Abtastfrequenzbereich und eine zweite Empfangsphase mit einem zweiten Abtastfrequenzbereich und wahlweise eine dritte Empfangsphase mit einem dritten Abtastfrequenzbereich vorzusehen, wobei der zweite Abtastfrequenzbereich Abtastfrequenzen umfasst, die höher sind als die des ersten Abtastfrequenzbereichs, und wahlweise der dritte Abtastfrequenzbereich Abtastfrequenzen umfasst, die höher sind als die oder gleich denen des zweiten Abtastfrequenzbereichs. Auf diese Weise kann in der ersten Empfangsphase, die beispielsweise als Vor-Hör-Modus bezeichnet werden kann, der Empfänger mit einer sehr niedrigen Abtastfrequenz bzw. Wiederholrate betrieben werden, während in der zweiten Empfangsphase, dem sogenannter Daten-Empfangs-Modus der Funkempfänger mit einer höheren Abtastfrequenz abgetastet wird, um ankommende modulierte Trägersignale für digitale Daten als Nutzsignale zu empfangen und zu decodieren. Wahlweise können weitere Nutzsignale mit einer noch höheren Wiederholrate oder Abtastfrequenz des Empfängers empfangen werden. Vorzugsweise ist die Abtastfrequenz innerhalb einer Empfangsphase konstant. Es kann aber für Anwendungen sinnvoll sein, dass die Abtastfrequenzen innerhalb eines Abtastfrequenzbereichs mindestens einer Phase variabel sind. Zum Beispiel können die Abtastimpulse zum Einschalten des Empfängers eine konstante Dauer haben, während die Abtastpausen unterschiedliche Längen aufweisen können, d. h., die Ausschaltdauer muss im Betrieb nicht konstant sein, sondern sie kann variabel gewählt werden. Die variable Abtastrate kann aufgrund der verwendeten Komponenten auftreten oder von vornherein vorgegeben werden. Beispielsweise ist ein RC-Oszillator als weniger genaue Zeitbasis für die Abtasttakterzeugung denkbar, wenn ein sehr geringer Stromverbrauch für den Empfängertakt erforderlich ist. Die Schwingfrequenz von RC-Oszillatoren ist u.a. temperaturabhängig. Somit ergäbe sich eine ungenauere Abtastrate, derart, dass bei nominal 250 Hz sich eine Toleranz von wenigen Prozent im Betrieb ergeben kann. Wird bewusst eine variable Abtastfrequenz beabsichtigt, so kann damit eine geringere Empfindlichkeit gegenüber Störsignalen mit konstanter Wiederholrate erzielt werden.

Wie schon ausgeführt, kann in einer Ausführungsform die Auswertevorrichtung und die Steuerschaltung derart ausgebildet sein, dass nach der zweiten Empfangsphase oder wahlweise nach der dritten Empfangsphase in die erste Phase abhängig von einem weiteren Umschaltkriterium umgeschaltet wird, wobei das weitere Umschaltkriterium eine vorgegebene Datensequenz oder eine vorgegebene Zeitdauer ist. Wenn somit der Empfang von Nutzdaten zu Ende ist, kann wieder in "Vor-Hör-Modus" umgeschaltet werden, wobei dies nach Ablauf einer vorgegebenen Zeitdauer oder durch an die Nutzdaten sich anschließende Signale der vorgegebenen Datensequenz geschehen kann.

Die für die Abtastung des Empfängers verwendete Abtastfrequenz mindestens einer der Empfangsphasen ist in Abhängigkeit von der Bitrate der auf das Trägersignal aufmodulierten Daten vorgegeben, wobei vorzugsweise der Empfänger zum Empfang von Daten mit niedriger Bitrate $\leq$ 10 kpbs ausgebildet ist. Dabei kann in einer ersten Empfangsphase, die beispielsweise den "Vor-Hör-Modus" betreffen kann, die Abtastfrequenz zwischen 10 und 1000 Hz liegen;
z. B. wird der Empfänger mit der Abtastfrequenz oder Wiederholrate von 250 Hertz betrieben.

In einer zweiten Empfangsphase, z. B. im Datenempfangsmodus, ist die Abtastfrequenz mindestens gleich der Bitrate der auf das Trägersignal aufmodulierten Daten, vorzugsweise ein Mehrfaches der Bitrate, vorzugsweise das Doppelte bis Achtfache der Bitrate. Bei Datenraten zwischen 1 kbps und 10 kbps ergeben sich somit Abtastraten 2 kHz - 80 kHz.

Hinsichtlich des Tastverhältnisses zwischen Abtastimpulsen und Abtastpausen beträgt dieses in einer ersten Empfangsphase, z. B. im Vorhörmodus (für Abtastfrequenzen 10 Hz - 1.000 Hz) zwischen 1:1.000.000 und 1:10.000, vorzugsweise 1:40.000 und in einer zweiten Phase liegt das Tastverhältnis zwischen 1:5.000 und 1:125, vorzugsweise bei etwa 1:1.250. Beispielsweise können die Abtastimpulse (ON-Zeit) zumindest für eine der Empfangsphasen, die Dauer von 50 ns bis 800 ns, vorzugsweise 100 ns, haben. Das heißt, wenn der Funkempfänger alle 4 ms (250 Hz) für 100 ns eingeschaltet wird, ergibt sich ein mittlerer Stromverbrauch von 25 ppm bezogen auf den Stromverbrauch des Funkempfängers im dauernd eingeschalteten Zustand. Wenn der Funkempfänger im dauernd eingeschalteten Zustand 10 mA verbraucht, ist der mittlere Stromverbrauch, gemittelt über 4 ms, dann 0,25 $\mu$A. Der Stromverbrauch unterhalb 1 $\mu$A kann leicht mit Energy-Harvesting-Methoden erzeugt werden.

Wie ausgeführt wurde, wird in einem bevorzugten Ausführungsbeispiel die Abtastfrequenz bzw. die Wiederholrate in einer Phase (z.B. Daten-Empfangs-Modus) in Relation zur Datenrate der HF-Modulation gewählt, d. h., die Abtastfrequenz soll mindestens so hoch wie oder höher sein als die Modulationsdatenrate. Es kann dabei auch eine Überabtastung erfolgen, wenn die Abtastfrequenz z. B. viermal so hoch wie die Modulationsdatenrate gewählt wird. Wird eine Modulationsdatenrate von 1 kbps und eine mittlere Abtastfrequenz (in der Daten-Empfangsphase) von 4 kHz angenommen, ergibt sich für den mittleren Stromverbrauch in dieser Phase ein Wert von 4 $\mu$A. Die Einschaltzeit kann in der Phase des Daten-Empfangs-Modus höher als in der Phase des Vor-Hör-Modus gewählt werden, wenn dies für den Funkempfänger z. B. für eine höhere Empfindlichkeit zweckmäßig ist. Während der längeren Einschaltzeit kann eine Selbstkalibrierung z.B. eines Komparators vorgenommen werden. Der mittlere Stromverbrauch ist somit um drei Größenordnungen niedriger als beim Funkempfänger nach dem Stand der Technik. Die Überabtastung beim Empfang von Nutzdaten ist ein hilfreiches Verfahren, wenn der Funkempfänger nicht auf den Funksender synchronisiert ist.

Vorzugsweise weist der Empfänger oder die Auswertevorrichtung einen Komparator auf, der die während der Abtastimpulse gelieferten amplitudendemodulierten Empfangssignale jeweils mit einem Schwellenwert vergleicht und Abtastwerte bildet.

Gemäß einem bevorzugten Ausführungsbeispiel kann der Empfänger als Superheterodynempfänger ausgebildet sein, dessen nützliche Eigenschaften mit dem stromsparenden Konzept nach der Erfindung kombiniert und somit gegenüber den sonst im Stand der Technik verwendeten Detektorempfängern oder Superregenerativempfängern eine hohe Empfindlichkeit und gute Trennschärfe sowie gute Integrierbarkeit aufweist.

Ein Ausführungsbeispiel der Erfindung ist in der Zeichnung dargestellt und wird in der nachfolgenden Beschreibung näher erläutert. Es zeigen

Fig. 1    eine blockschaltgemäße Ausgestaltung der erfindungsgemäßen Empfängeranordnung,

Fig. 2    eine schematische Darstellung der Empfangsphasen mit adaptiver Anpassung der Abtastfrequenz, wie sie bei der erfindungsgemäßen Empfängeranordnung verwendet wird,

Fig. 3    einen Ablaufgraphen zur Darstellung der Umschaltung zwischen zwei Empfangsphasen und mit drei Empfangsphasen,

Fig. 4    ein Diagramm das Strom versus Aktivierungen pro Tag für eine Umschaltung zwischen Vorhören und Datenempfang zeigt,

Fig. 5    eine Darstellung von Abtastsignalen bzw. Einschaltimpulsen des Empfängers in Bezug auf Datenbits im Pulsbetrieb mit 4-fach Überabtastung,

Fig. 6    ein Diagramm der Datenrate in Abhängigkeit von der Einschaltperiode,

Fig. 7    Diagramme der Reaktionszeit und des Stromverbrauchs des Empfängers und

Fig. 8    ein Diagramm des Stromverbrauchs in Abhängigkeit von der Reaktionszeit.

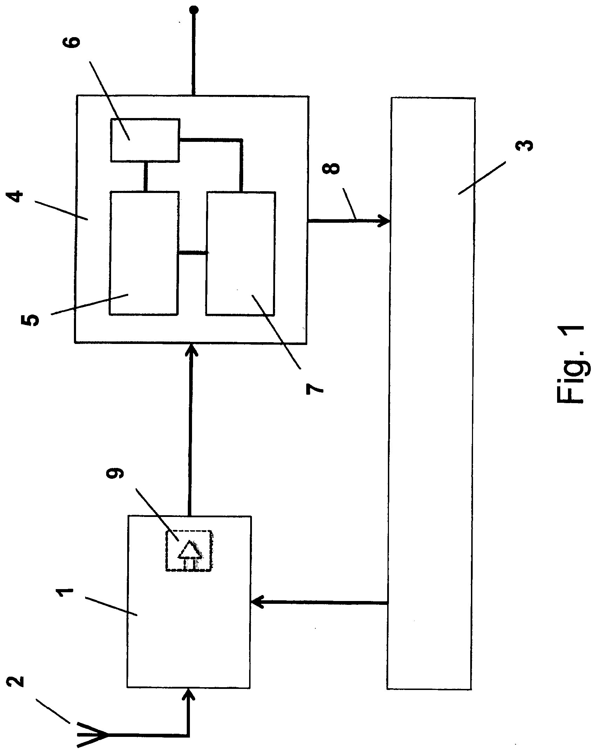

Die in Fig. 1 dargestellte erfindungsgemäße Empfängeranordnung weist einen analogen Empfänger 1 auf, der beispielsweise als Superheterodynempfänger ausgebildet ist und der eine Antenne 2 umfasst. Die Antenne 2 liefert ein Hochfrequenzsignal (RF-Signal), das ein HF-Trägersignal und darauf amplitudenmodulierte Datenbits mit relativ niedriger Bitrate umfasst. In bekannter Weise weist der Empfänger 1 einen nicht dargestellten RF-Verstärker, einen Mischer, z.B. einen Gilbertmischer, der an einen freischwingenden Lokaloszillator, z.B. einen integrierten LC-Oszillator angeschlossen ist, einen ZF-Tiefpass, einen ZF-Verstärker und einen Amplitudendemodulator auf.

Das von der Antenne 2 gelieferte Hochfrequenzsignal wird in bekannter Weise zunächst in dem RF-Verstärker verstärkt und dann auf eine Zwischenfrequenz herabgemischt. Das Zwischenfrequenzsignal (ZF-Signal) wird über den ZF-Tiefpass gefiltert und von dem ZF-Verstärker weiter verstärkt. Das verstärkte ZF-Signal wird demoduliert, so dass am Ausgang des Empfängers die demodulierten Signale anliegen.

Weiterhin ist eine Steuervorrichtung 3 vorgesehen, die Abtastsignale erzeugt, wobei diese Abtastsignale an den Empfänger 1 geliefert werden und hier an den sogenannten "Power-down"-Eingang. Der Empfänger 1 wird somit, gesteuert durch die Steuervorrichtung 3, im abtastenden Betrieb verwendet, d. h., die Steuervorrichtung 3 liefert Folgen von kurzen Abtastimpulsen, während denen der Empfänger 1 aktiviert, d. h. eingeschaltet wird, während in den Abtastpausen zwischen den Abtastimpulsen der Empfänger 1 ausgeschaltet, d. h. deaktiviert ist. Der Empfänger 1 liefert somit im eingeschalteten Zustand einen kurzen Signalausschnitt bzw. Signalimpuls, der in einem Komparator 9 mit einem Schwellenwert verglichen wird, wodurch eine Folge von Abtastwerten gebildet wird, die den Wert "0" oder den Wert "1" haben können. Der Komparator kann Bestandteil des Empfängers 1 sein, oder er ist Bestandteil einer im Folgenden beschriebenen Auswertevorrichtung 4.

Die Auswertevorrichtung 4 umfasst Mittel 5 zum Umwandeln der von dem Empfänger 1 bzw. von dem darin enthaltenen Komparator 9 gelieferten Abtastwerte in eine Folge von Datenbits. Dabei sind die Mittel beispielsweise als ein in Datenlogik aufgebautes integriertes Schaltwerk ausgebildet, das beispielsweise einen rückstellbaren Zähler und Digitalkomparatoren aufweisen kann. Weiterhin kann eine Weiterverarbeitung der von den Mitteln 5 umgewandelten Datenbits vorgesehen sein, die mit 6 bezeichnet wird. Schließlich sind Mittel 7 zur Erkennung mindestens einer als Code vorgegebenen Datensequenz in der Auswertevorrichtung 4 integriert, die einen Speicher zum Speichern der vorgegebenen Datensequenz und eine Vergleichseinrichtung der von den Mitteln 5 gelieferten Datenbits mit der gespeicherten Datensequenz aufweist. Abhängig von einem solchen Vergleich liefert die Auswertevorrichtung 4 ein Umschaltsignal 8 an die Steuervorrichtung 3, die abhängig von dem Umschaltsignal 8 die Abtastfrequenz der Abtastung des Empfängers 1 ändert.

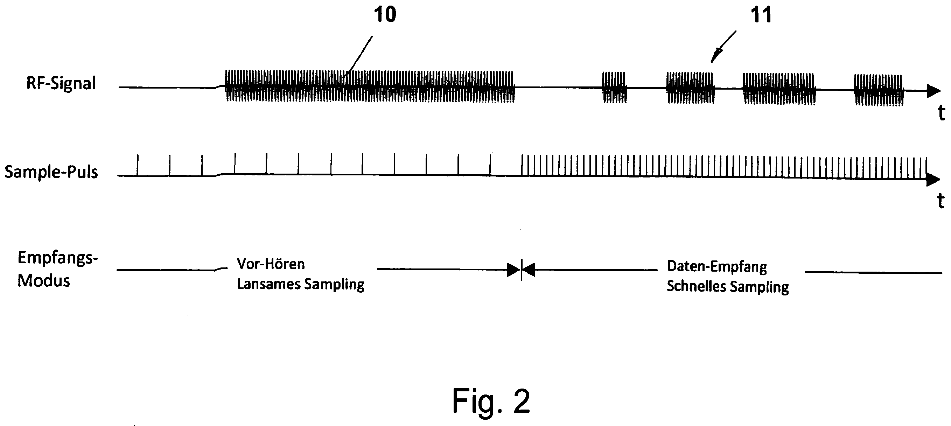

Die Steuervorrichtung 3 steuert somit den Empfänger 1 in Phasen unterschiedlicher Abtastfrequenzen an, wobei in Fig. 2 zwei Phasen unterschiedlicher Abtastfrequenzen dargestellt sind. In der ersten Phase, die als Vor-Hör-Phase bezeichnet wird, wird der Funkempfänger 1 langsam abgetastet, d. h., die Steuervorrichtung 3 liefert Abtastimpulse mit einer niedrigen Abtastfrequenz. In Fig. 2 sind die Abtastimpulse auf der zweiten Skala schematisch gezeigt; die langsame Abtastung bzw. das Vor-Hören ist links dargestellt. In der obersten Skala ist ein RF-Signal dargestellt, wobei das Signal 10 eine Datensequenz repräsentiert, die mit einer in den Mitteln 7 zur Erkennung einer Umschaltsequenz gespeicherten Datensequenz zu vergleichen ist. Diese Datensequenz kann beispielsweise als eine Folge von aufeinanderfolgenden Bits mit dem Wert "1" ausgebildet sein. Der Vor-Hör-Modus mit langsamer Abtastung bleibt so lange ausgewählt, bis das Signal 10 als gespeicherte Datensequenz erkannt wird, d. h., bis die empfangenen Datenbits des Funkempfängers 1 das Umschaltkriterium erfüllen. Die Datensequenz kann beispielsweise eine Folge von acht aufeinanderfolgende Bits mit dem Wert "1" sein, wobei bei Übereinstimmung das Umschaltsignal 8 erzeugt wird, oder in einem anderen Beispiel kann die Umschaltung initiiert werden, wenn mindestens fünf von acht aufeinanderfolgenden Bits als "1" empfangen werden.

In diesem Fall schaltet die Steuervorrichtung 3 auf eine schnelle Abtastung um, wobei dies in Fig. 2 auf der rechten Seite dargestellt ist. Nunmehr werden Nutzsignale 11 in der zweiten Phase des Daten-Empfangs mit einer höheren Abtastfrequenz bzw. Wiederholrate abgetastet und empfangen, in der Auswertevorrichtung 4 durch die Mittel 5 umgewandelt und gegebenenfalls durch die Verarbeitungseinheit 6 verarbeitet und als Ausgangssignal am Ausgang der Auswertevorrichtung zur Verfügung gestellt. Dabei kann die Verarbeitungseinheit 6 ein Downsampler sein, der die Digitalsignale beliebig, beispielsweise 1:1 bis 1:8 umsetzt.

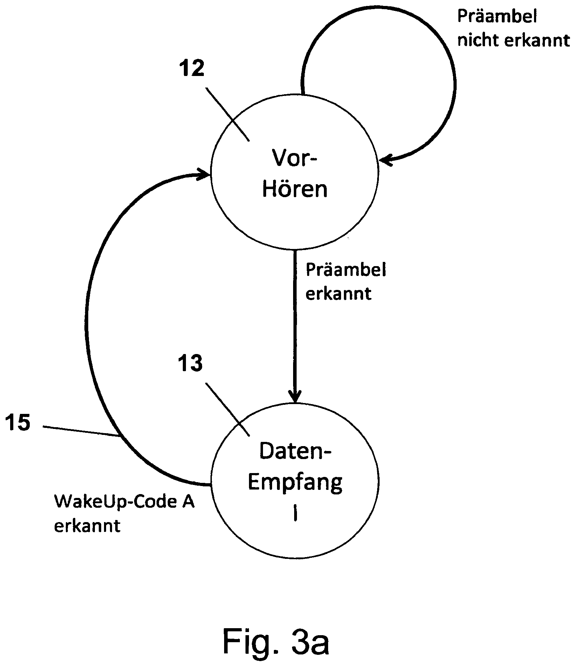

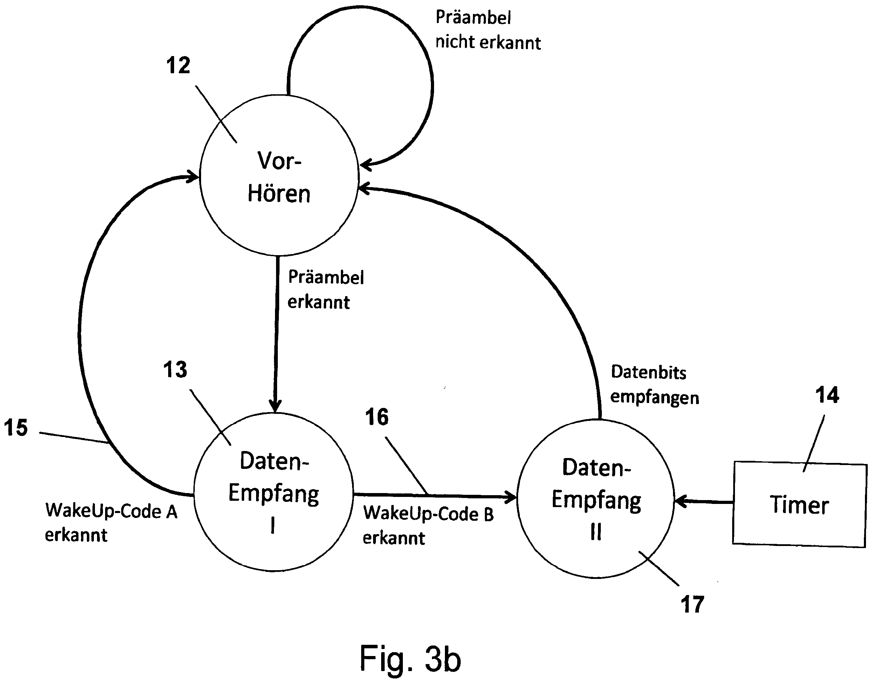

In Fign. 3a und 3b sind Graphen für den Ablauf der Umschaltung zwischen Phasen unterschiedlicher Abtastfrequenz dargestellt, wobei Fig. 3a) zwei Phasen, nämlich das Vor-Hören mit langsamer Abtastung und den Datenempfang mit schneller Abtastung, zu erkennen sind, während in Fig. 3b) drei Phasen der Abtastung gezeigt sind.

Fig. 3a) zeigt mit Zustand 12 die langsame Abtastung des Empfängers 1 durch die Steuervorrichtung 3, wobei hier die Abtastfrequenz 250 Hz beträgt und die Dauer des Abtastimpulses 100 ns ist, d. h., dass alle 4 ms der Funkempfänger 1 für 100 ns eingeschaltet wird. Der mittlere Stromverbrauch ist 0,25 $\mu$A. Der Empfänger 1 hört somit in den Übertragungskanal hinein, ob ein für ihn vorgesehenes Signal kommt. Wenn nun ein Signal 10 (siehe Fig. 2), das in Fig. 3 mit Präambel bezeichnet ist, empfangen wird und als Acht-Bit-Sequenz "11111111" (Umschaltsequenz) von den Mitteln 7 erkannt wird, schaltet die Steuervorrichtung 3 die Abtastung in eine andere Phase, d. h. in die schnelle Abtastung, um, was durch den Zustand 13 angedeutet ist. In diesem Zustand ist die Abtastfrequenz im Ausführungsbeispiel 4 kHz. Der Datenempfang ist ein Wake-up Code mit 32 bit und einer Datenrate 8 kbps, d.h. bei 64 kHz findet eine 8-fache Überabtastung statt. Für die zweite Phase ergibt sich ein mittlerer Stromverbrauch gemittelt über die Dauer des Datenempfangs von 64 $\mu$A. In dieser zweiten Phase des Daten-empfangs werden die Signale 11 im Empfänger 1 demoduliert und in der Auswertevorrichtung verarbeitet, so dass sie als Daten an ihrem Ausgang zur Verfügung stehen.

Falls, wie beispielhaft oben angegeben, die Empfängeranordnung als Aufweckempfänger (Wake-up) ausgebildet ist, stellen die Signale 11 die erwähnte Aufwecksequenz, d.h. den Wake-up Code dar, die bzw. der ebenfalls zum Vergleich in der Auswertevorrichtung 4 gespeichert ist, wobei bei Übereinstimmung ein Aufwecksignal an andere Empfänger, die beispielsweise zu einem Funkknoten zusammengeschaltet sind, gesendet werden kann. Wenn der Wake-up Code im Empfänger durch Einlesen der 32 Datenbits erkannt wurde, wird automatisch entsprechend Fig. 3a über 15 in den Vorhör-Modus umgeschaltet.

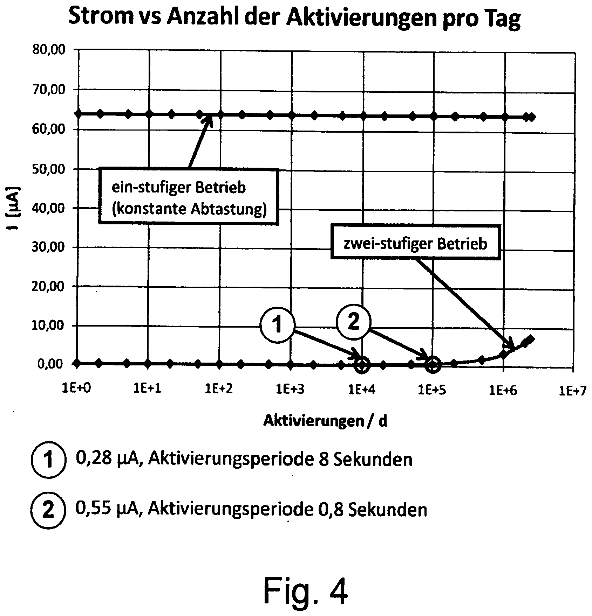

In Fig. 4 ist der mittlere Stromverbrauch in Abhängigkeit von der Anzahl der Aktivierungen pro Tag, bzw. Anzahl der empfangenen Umschaltsequenzen (8 Bit), d.h. Umschalten zwischen Vorhör-Modus und Datenempfangsmodus entsprechend dem Diagramm nach Fig. 3a, dargestellt und zwar gemittelt über einen Tag. Theoretisch würde ein ununterbrochenes Empfangen von Umschaltsequenzen in der Empfängeranordnung bewirken, dass der Stromverbrauch seinen Maximalwert erreicht. Im einstufigen Betrieb, d.h. bei konstanter Abtastung entsprechend der oberen Kurve ist der Maximalwert 64 $\mu$A. Für die im Zusammenhang mit Fig. 3a angegebenen Zahlenwerte ergibt sich bei einem ständigen Umschalten zwischen Vorhören und Datenempfang ein Maximalwert 7,3 $\mu$A, das entspricht 2,4 Millionen Umschaltvorgängen pro Tag. Wird dieses erfindungsgemäße Verfahren für den Betrieb der Empfängeranordnung mit einem Verfahren konstanter Abtastrate verglichen, so beträgt die Stromersparnis bis zum Faktor 256. Dies kann in der Praxis mit einem Stromverbrauch von 0,28 $\mu$A bis Umschalthäufigkeiten von 10.000-mal pro Tag (etwa alle 8 Sekunden) erreicht werden (① in Fig. 4). Bei einem Stromverbrauch von 0,55 $\mu$A lässt sich sogar eine Umschalthäufigkeit von 100.000-mal pro Tag, etwa alle 0,8 Sekunden, erreichen (② in Fig. 4).

In Fig. 3b) ist ein Übertragungsverfahren mit drei Phasen unterschiedlicher Abtastfrequenzen dargestellt, das beispielsweise für den Fall eines Aufweckempfängers gelten kann, der eine Aufwecksequenz als erste Nutzdaten und zweite Nutzdaten empfangen kann, die beispielsweise Sensordaten beinhalten oder eine Identifikation, eine Authentifizierung Fernsteuerkommandos oder Konfigurationsdaten, aber auch Angaben über die Länge des Nutzdatenpakets oder Angabe über sein Ende betreffen.

Wiederum durch Empfang einer Umschaltsequenz (Präambel), deren Bits achtmal den Wert "1" haben, wird in die schnelle Abtastung 13 für den Empfang von Nutzdaten (Aufwecksequenz) umgeschaltet. Falls keine weiteren Nutzdaten gesendet werden, wird, entsprechend Zweig 15 in die langsame Abtastung (Vorhören) 12 umgeschaltet. Eine weitere Möglichkeit ist, dass eine Datensequenz in Form eines Codes B 16 gesendet wird, durch die nach Erkennung die Steuervorrichtung 3 in eine dritte Phase mit schneller Abtastung 17 umschaltet, mit der weitere Nutzdaten empfangen werden können. Nach Beendigung ihrer Übertragung kann entsprechend Fig. 3a) in die langsame Abtastung 12 über einen Timer 14 oder ein weiteres Umschaltkriterium umgeschaltet werden.

Im Folgenden sollen beispielhaft einige Ausführungen für eine Phase mit schneller Abtastung gegeben werden.

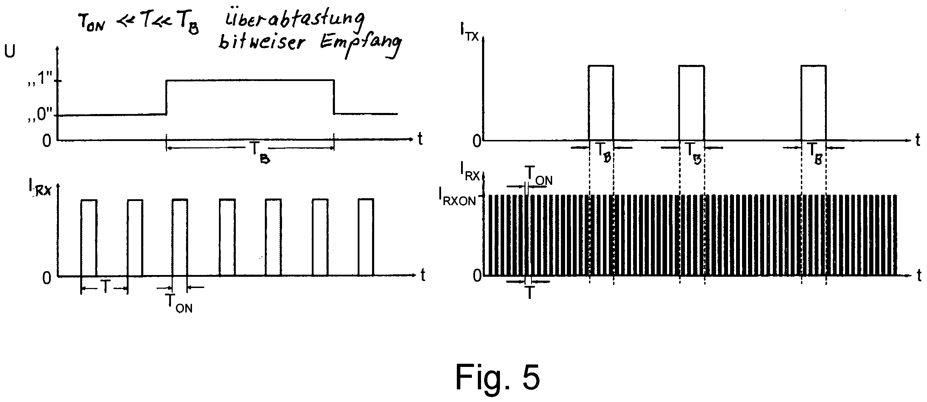

Wird der Funkempfänger im Pulsbetrieb mit Überabtastung eingesetzt, so ist die Einschaltperiode T, d.h. ein Ein- und Ausschalten des Empfängers kleiner als die Bitdauer $T_b$ (hier 1 ms). Um den niedrigen Stromverbrauch von 12 $\mu$A zu erzielen, muss die Einschaltdauer $T_{ON}$ mit weniger als 250 ns sehr kurz gewählt werden (siehe Fig. 5). So kann beispielsweise eine Abtastfrequenz von 4 kHz gewählt werden, damit jedes empfangene Datenbit vier Mal abgetastet werden kann. Bei nichtsynchronisiertem Funkempfang wird daher blind überabgetastet ("blind oversampling") und eine Überabtastrate von mindestens vier angenommen (siehe Fig. 5). Damit werden folgende Bedingungen für den überabtastenden Pulsbetrieb bei Datenempfang von 1 kbps formuliert:

T ≤ 250 μs ⟺ Abtastrate ≥ 4 kHz und

$T_{ON}$ ≤ 250 ns ≤ D · T (für ein Tastverhältnis (Dutycycle) von D <= 0,1%).

In Fig. 5 ist die Gewinnung einzelner Abtastpunkte einzelner Datenbits im Pulsbetrieb mit 4-fach-Überabtastung dargestellt.

Das linke Teilbild zeigt die Einschaltpulse während einzelner Datenbits. Im rechten Teilbild ist eine große Anzahl von Einschaltpulsen bzw. Abtastimpulsen beim asynchronen Empfang mehrerer Datenbits dargestellt.

Tabelle 1: Parameter für Pulsbetrieb mit Überabtastung

| Periode T | $T_{ON}$ | Sample-Rate | Oversampling-Ratio (=Zahl der Einschaltpulse während Bitdauer $T_b$) | Reaktions-Zeit (= Dauer des Funktelegramms) |
|---|---|---|---|---|
| 100 μs | 100 ns | 10 kHz | 10 | 30 ms |
| 200 μs | 200 ns | 5 kHz | 5 | 30 ms |
| 250 μs | 250 ns | 4 kHz | 4 | 30 ms |
| 1 ms | 1 μs | 1 kHz | 1 (zu niedrig) | - |

In Tab 1 kann der zulässige Wertebereich für $T_{ON}$ von 100 ns bis 250 ns abgelesen werden, damit die mehrfache Überabtastung (OVS) gelingt. Als Reaktionszeit kann die Dauer eines Wortes bezeichnet werden, da die Auswertung kontinuierlich geschieht und nach kompletten Empfang eines Wortes reagieren kann. Beispielhaft kann als Wort ein Wake-up Code angesehen werden, d.h. bei einem Wake-up Empfang reagiert die Auswertung unmittelbar nach Ende des Codes.

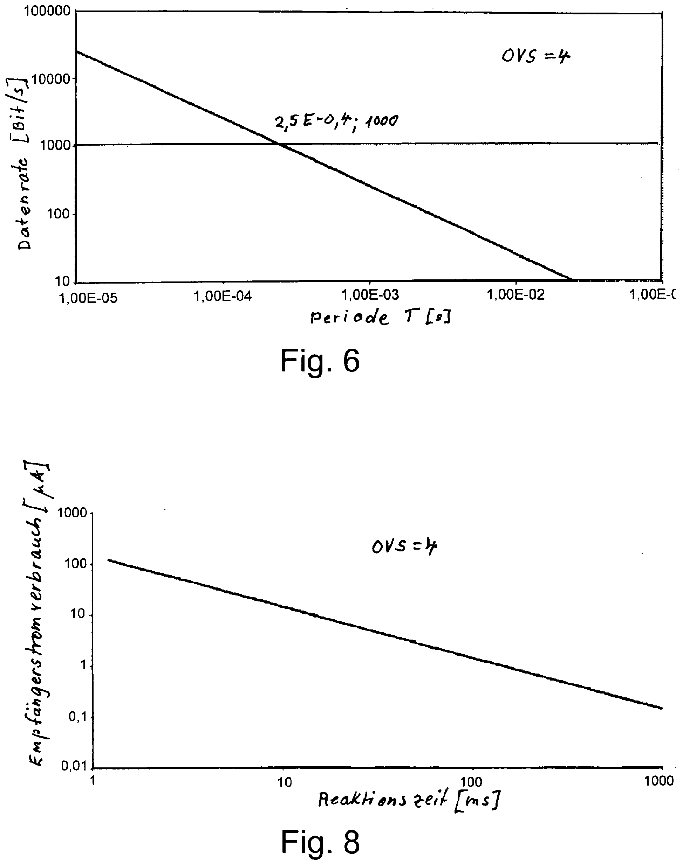

In Fig. 6 ist die zulässige Datenrate in Abhängigkeit der Einschaltperiode bei 4-facher Überabtastung dargestellt.

Für einen überabtastenden Empfänger nimmt die maximale mögliche Datenrate mit kürzer werdender Schaltperiode T zu (siehe Fig. 6). Die Datenrate $1/T_b$ errechnet sich zu

$$\frac{1}{T_b} \leq \frac{1}{4T} \ .$$

Die Einschaltperiode darf maximal 250 μs sein, damit eine Datenrate von 1 kbps mit 4-fach Oversampling im Empfänger erzielt werden kann. Damit geht eine maximale Einschaltdauer $T_{ON}$ von 250 ns einher.

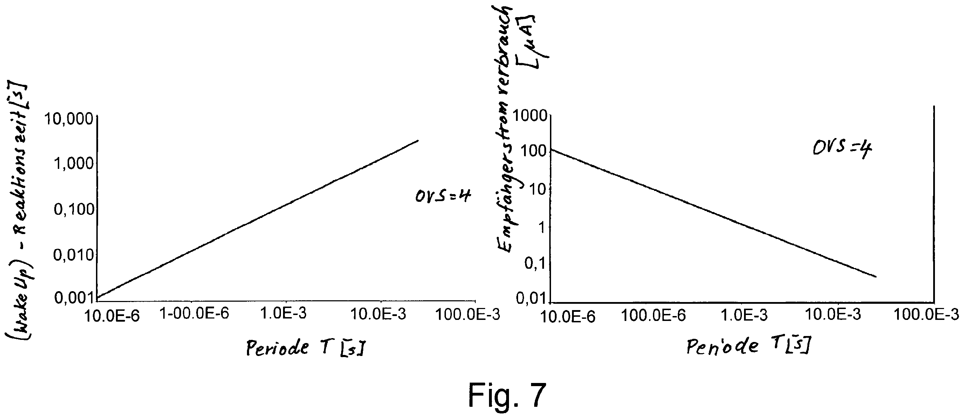

Für eine Abtastrate bzw. Abtastfrequenz von 10 kHz und einer Einschaltdauer von 100 ns ergibt sich eine erzielbare Datenrate von 2,5 kbps. Ein 30 Bit-Funktelegramm wird dabei in 7,5 ms übertragen. Mit einer 210 mAh-Lithium-Knopfzelle CR2032 ergibt sich eine maximale Betriebsdauer von zwei Jahren. Damit ist die Stärke der geringen Reaktionszeit bei gleichzeitig niedrigem Stromverbrauch (12 μA) für das Konzept des überabtastenden Funkempfängers gezeigt. In Fig. 7 sind die Reaktionszeit und der Stromverbrauch abhängig von der Einschaltperiode T dargestellt. Wird die Datenrate variiert und der Empfang auf die feste Telegrammlänge 30 Bit ausgelegt, so steigt die Paketdauer mit wachsender Schaltperiode T (siehe Fig. 7, links). Die Reaktionszeit bezüglich des Telegramms errechnet sich bei 4-facher Überabtastung zu

$$T_{reaktion} = T_{ON}/D = 30 \cdot 4 \cdot T.$$

Für 250 μs Einschaltperiode ist die Reaktionszeit 30 ms, die Datenrate ist dann 1 kbps. Eine Reaktionszeit von 1 Sekunde ist für eine Einschaltperiode von 8,33 ms erreichbar. Gleichzeitig nimmt der mittlere Stromverbrauch mit größerer Periode ab (siehe Fig. 7, rechts):

$$\bar{I}_{RX} = \frac{T_{on}}{T} \cdot I_{RX,on}$$

Für die Berechnung wurde eine feste Einschaltdauer $T_{ON}$ von 100 ns und ein Empfängerstromverbrauch $I_{RX,ON}$

von 12 mA angenommen.

Wird der Stromverbrauch über der Reaktionszeit aufgetragen, so ergibt sich

$$\bar{I}_{RX} = \frac{T_{on} \cdot 120}{T_{reaktion}} \cdot I_{RX,on} \cdot$$

Fig. 8 veranschaulicht den Zusammenhang zwischen dem Stromverbrauch und der Reaktionszeit graphisch. Eine höhere Reaktionszeit ermöglicht einen deutlich niedrigeren Stromverbrauch unterhalb 10 μA. Für 100 ms Reaktionszeit kann ein sehr niedriger mittlerer Stromverbrauch von 1,44 μA erzielt werden bei einer angenommen Einschaltdauer von 100 ns. Bei Knopfzellenbetrieb (CR 2032, 210 mAh) ergibt sich eine theoretische Betriebsdauer von 16 Jahren. Die obigen Ausführungen wurden für eine schnelle Abtastung gegeben, sie gelten entsprechend für eine langsamere Abtastung.

Die obigen Ausführungen sollen beispielhaft anhand einer schnellen Abtastung die verschiedenen Einflussparameter zeigen. Abhängig vom gewünschten Ergebnis können somit die passenden Parameter ausgewählt werden.

**Patentansprüche**

1. Empfängeranordnung zum drahtlosen Empfang von Daten, die auf ein Trägersignal aufmoduliert sind, mit einem analogen Empfänger (1), einer Auswertevorrichtung (4) und einer Steuervorrichtung (3), wobei die Steuervorrichtung (3) den Empfänger (1) mittels Abtastimpulsen derart ansteuert, dass er während der Abtastimpulse eingeschaltet und bereit zum Empfang von Sendesignalen ist und während der Abtastpausen ausgeschaltet ist und keine Sendesignale empfängt, und die Auswertevorrichtung (4) aus den von dem Empfänger (1) während der Abtastimpulse gelieferten Empfangssignalen eine Datenbitfolge erzeugt,
**dadurch gekennzeichnet, dass**
der Empfänger ausgebildet ist, Daten mit einer Bitrate < 10 kbps zu empfangen,
die Steuervorrichtung (3) weiterhin ausgebildet ist, die Ansteuerung des Empfängers (1) zwischen Phasen von Abtastimpulsen mit unterschiedlichen Abtastfrequenzbereichen abhängig von mindestens einem vorgegebenen Umschaltkriterium umzuschalten, wobei das Umschaltkriterium mindestens eine vorgegebene Datensequenz ist, die in der Auswertevorrichtung (4) gespeichert ist, und die Auswertevorrichtung (4) Mittel (7) zum Erkennen der vorgegebenen Datensequenz umfasst, die bei Übereinstimmung der empfangenen Datenbitfolge mit der vorgegebenen Datensequenz an die Steuervorrichtung (3) ein Umschaltsignal zum Wechseln von einer Phase von Abtastimpulsen mit einem Abtastfrequenzbereich in eine weitere Phase von Abtastimpulsen mit einem weiteren Abtastfrequenzbereich liefert, wobei das Tastverhältnis zwischen Abtastimpulsen und Abtastpausen in einer ersten Phase zwischen 1:1.000.000 und 1:10.000 und in einer zweiten Phase zwischen 1:5.000 und 1:125 beträgt und die Abtastimpulse eine Dauer von 50 ns bis 800 ns haben.

2. Empfängeranordnung nach Anspruch 1, **dadurch gekennzeichnet, dass** mindestens eine weitere vorgegebene Datensequenz in der Auswertevorrichtung (4) als Umschaltkriterium zu noch einer anderen Phase mit noch einem anderen Abtastfrequenzbereich gespeichert ist.

3. Empfängeranordnung nach Anspruch 1 oder 2, **dadurch gekennzeichnet, dass** das Umschaltkriterium eine vorgegebene Zeitdauer ist, die von der Auswertevorrichtung (4) oder der Steuervorrichtung (3) vorgebbar ist und ein Umschaltsignal zwischen mindestens zwei Phasen auslöst.

4. Empfängeranordnung nach einem der Ansprüche 1 bis 3, **dadurch gekennzeichnet, dass** eine erste Phase mit einem ersten Abtastfrequenzbereich und eine zweite Phase mit einem zweiten Abtastfrequenzbereich und wahlweise eine dritte Phase mit einem dritten Abtastfrequenzbereich vorgesehen sind, wobei der zweite Abtastfrequenzbereich Abtastfrequenzen umfasst, die höher sind als die des ersten Abtastfrequenzbereichs, und wahlweise der dritte Abtastfrequenzbereich Abtastfrequenzen umfasst, die höher sind als die oder gleich denen des zweiten Abtastfrequenzbereichs.

5. Empfängeranordnung nach Anspruch 4, **dadurch gekennzeichnet, dass** die Auswertevorrichtung (4) und die Steuervorrichtung (3) ausgebildet sind, nach der zweiten Phase oder wahlweise nach der dritten Phase in die erste Phase abhängig von einem weiteren Umschaltkriterium umzuschalten, wobei das weitere Umschaltkriterium eine vorgegebene Datensequenz oder eine vorgegebene Zeitdauer ist.

6. Empfängeranordnung nach einem der Ansprüche 1 bis 5, **dadurch gekennzeichnet, dass** innerhalb einer Phase die Abtastfrequenz konstant ist.

7. Empfängeranordnung nach einem der Ansprüche 1 bis 6, **dadurch gekennzeichnet, dass** der Abtastfrequenzbereich mindestens einer Phase variable Abtastfrequenzen umfasst.

8. Empfängeranordnung nach einem der Ansprüche 1 bis 7, **dadurch gekennzeichnet, dass** die Abtastfrequenz mindestens einer der Phasen in Abhängigkeit der Bitrate der auf das Trägersignal aufmodulierten Daten bestimmt ist.

9. Empfängeranordnung nach einem der Ansprüche 1 bis 8, **dadurch gekennzeichnet, dass** in einer ersten Phase die Abtastfrequenz zwischen 10 und 1000 Hz liegt und in einer zweiten Phase zwischen 2 kHz und 80 kHz.

10. Empfängeranordnung nach einem der Ansprüche 1 bis 9, **dadurch gekennzeichnet, dass** mindestens in einer zweiten Phase die Abtastfrequenz mindestens gleich der Bitrate der auf das Trägersignal aufmodulierten Daten ist.

11. Empfängeranordnung nach einem der Ansprüche 1 bis 10, **dadurch gekennzeichnet, dass** das Tastverhältnis zwischen Abtastimpulsen und Abtastpausen in einer ersten Phase 1:40.000 und in einer zweiten Phase etwa 1:1.250 beträgt.

12. Empfängeranordnung nach einem der Ansprüche 1 bis 11, **dadurch gekennzeichnet, dass** die Dauer der Abtastimpulse zumindest für die erste Phase 100 ns beträgt.

13. Empfängeranordnung nach einem der Ansprüche 1 bis 12, **dadurch gekennzeichnet, dass** die Auswertevorrichtung ausgebildet ist, die Auswertung kontinuierlich entsprechend jedem bei einer Einschaltperiode des Empfängers erfassten Abtastwert vorzunehmen.

14. Empfängeranordnung nach einem der Ansprüche 1 bis 13, **dadurch gekennzeichnet, dass** der Empfänger (1) oder die Auswertevorrichtung (4) einen Komparator (9) aufweist, der die während der Abtastimpulse gelieferten amplitudendemodulierten Empfangssignale mit einem Schwellenwert vergleicht und Abtastwerte bildet.

15. Empfängeranordnung nach einem der Ansprüche 1 bis 14, **dadurch gekennzeichnet, dass** der Empfänger (1) als Superheterodynempfänger ausgebildet ist.

## Claims

1. A receiver arrangement for the wireless reception of data which is modulated onto a carrier signal, comprising an analogue receiver (1), an evaluation device (4) and a control device (3), wherein the control device (3) controls the receiver by way of sampling pulses, in a manner such that it is switched on and is ready for receiving transmission signals during the sampling pulses and is switched off and receives no transmission signals during the sampling pauses, and the evaluation device (4) generates a data bit sequence from the received signals delivered by the receiver (1) during the sampling pulses,
**characterised in that**
the receiver is configured to receive data with a bit rate < 10 kbps,
the control device (3) is moreover configured to switch over the activation of the receiver (1) between phases of sampling pulses with different sampling frequency ranges, depending on at least one predefined switching-over criterion,
wherein the switch-over criterion is at least one predefined data sequence which is stored in the evaluation device (4), and the evaluation device (4) comprises means (7) for recognising the predefined data sequence, which, with an agreement of the received data bit sequence with the predefined data sequence, delivers a switch-over signal to the control device (3), for changing from one phase of sampling pulses with one sampling frequency range into a further phase of sampling pulses with a further sampling frequency range, the sampling ratio between the sampling pulses and sampling pauses, in a first phase being between 1:1'000'000 and 1:10'000, and in a second phase between 1:5'000 and 1:125, and the sampling pulses having a duration of 50 ns to 800 ns.

2. Receiver arrangement according to claim 1, **characterised in that** at least one further predefined data sequence is stored in the evaluation device as a switch-over criterion to yet another phase with yet another sampling frequency range.

3. Receiver arrangement according to claims 1 or 2, **characterised in that** the switch-over criterion is a predefined time duration which can be set by the evaluation device (4) or the control device (3) and activates a switch-over signal between at least two phases.

4. Receiver arrangement according to one of the claims 1 to 3, **characterised in that** a first phase with a first sampling frequency range and a second phase with a second sampling frequency range and selectively a third phase with a third sampling frequency range are provided, wherein the second sampling frequency range comprises sampling frequencies which are higher than those of the first sampling frequency range, and selectively the third sampling frequency range comprises sampling frequencies which are higher than those or equal to those of the second sampling frequency range.

5. Receiver arrangement according to claim 4, **characterised in that** the evaluation device (4) and the control device (3) are configured, after the second phase or selectively after the third phase, to switch over into the first phase, depending on a further switch-over criterion, wherein the further switch-over criterion is a predefined data sequence or a predefined time duration

6. Receiver arrangement according to one of the claims 1 to 5, **characterised in that** the sampling frequency is constant within a phase.

7. Receiver arrangement according to one of the claims 1 to 6, **characterised in that** the sampling frequency range of at least one phase comprises variable sampling frequencies.

8. Receiver arrangement according to one of the claims 1 to 7, **characterised in that** the sampling frequency of at least one of the phases is determined in dependence on the bit rate of the data modulated onto the carrier signal.

9. Receiver arrangement according to one of the claims 1 to 8, **characterised in that** the sampling frequency in a first phase lies between 10 and 1000 KHz and in a second phase between 2kHz and 80 kHz.

10. Receiver arrangement according to one of the claims 1 to 9, **characterised in that** at least in a second phase the sampling frequency is at least equal to the bit rate of the data modulated onto the carrier signal.

11. Receiver arrangement according to one of the claims 1 to 10, **characterised in that** the sampling ratio between two sampling pulses and sampling pauses in a first phase is 1:40'000 and in a second phase about 1:1'250.

12. Receiver arrangement according to one of claims 1 to 11, **characterised in that** the duration of the sampling pulses is 100 ns at least for the first phase.

13. Receiver arrangement according to one of the claims 1 to 12, **characterised in that** the evaluation device is configured to carry out the evaluation in a continuous manner according to each sampling value detected at a switch-on period of the receiver.

14. Receiver arrangement according to one of the claims 1 to 13, **characterised in that** the receiver (1) or the evaluation device (4) comprises a comparator (9) which compares the amplitude-modulated received signals delivered during the sampling pulses, to a threshold value, and which forms sampling values.

15. Receiver arrangement according to one of the claims 1 to 14, **characterised in that** the receiver (1) is configured as a super heterodyne receiver.

**Revendications**

1. Dispositif récepteur pour la réception sans fil de données, qui sont modulées sur un signal porteur, avec un récepteur analogique (1), un dispositif d'analyse (4) et un dispositif de commande (3), le dispositif de commande (3) contrôlant le récepteur (1) au moyen d'impulsions de balayage, de façon à ce qu'il soit mis en marche pendant les impulsions de balayage et prêt à la réception de signaux d'émission et à ce qu'il soit arrêté pendant les pauses de balayage et ne reçoive aucun signal d'émission et le dispositif d'analyse (4) générant, à partir les signaux de réception délivrés par le récepteur (1) pendant les impulsions de balayage, une suite de bits de données, **caractérisé en ce que**

le récepteur est conçu pour recevoir des données avec un débit de données < 10 kbps,

le dispositif de commande (3) est en outre conçu pour commuter le contrôle du récepteur (1) entre les phases des impulsions de balayage avec différentes plages de fréquences de balayage en fonction d'au moins un critère de commutation prédéterminé,

le critère de commutation étant au moins une séquence de données prédéterminée qui est enregistrée dans le dispositif d'analyse (4), et le dispositif d'analyse (4) comprenant des moyens (7) pour la détection de la séquence de données prédéterminée qui, lors de la coïncidence de la suite de bits de données reçue avec la séquence de données prédéterminée, délivre au dispositif de commande (3), un signal de commutation pour le changement d'une phase d'impulsions de balayage avec une plage de fréquences de balayage vers une autre phase d'impulsions de balayage avec une autre plage de fréquences de balayage, le rapport cyclique entre les impulsions de balayage et les pauses de balayage dans une première phase étant entre 1:1.000.000 et 1:10.000 et, dans une deuxième phase, entre 1:5.000 et 1:125 et les impulsions de balayage présentant une durée de 50 ns à 800 ns.

2. Dispositif récepteur selon la revendication 1, **caractérisé en ce qu'**au moins une autre séquence de données prédéterminée est enregistrée dans le dispositif d'analyse (4) en tant que critère de commutation vers encore une autre phase avec encore une autre plage de fréquences de balayage.

3. Dispositif récepteur selon la revendication 1 ou 2, **caractérisé en ce que** le critère de commutation est une durée prédéterminée qui peut être prédéterminée par le dispositif d'analyse (4) ou le dispositif de commande (3) et qui déclenche un signal de commutation entre au moins deux phases.

4. Dispositif récepteur selon l'une des revendications 1 à 3, **caractérisé en ce qu'**une première phase avec une première plage de fréquences de balayage et une deuxième phase avec une deuxième plage de fréquences de balayage et, au choix, une troisième phase avec une troisième plage de fréquences de balayage, sont prévues, la deuxième plage de fréquences de balayage comprenant des fréquences de balayage qui sont supérieures à celles de la première plage de fréquences de balayage et, au choix, la troisième plage de fréquences de balayage comprenant des fréquences de balayage qui sont supérieures ou égales à celles de la deuxième plage de fréquences de balayage.

5. Dispositif récepteur selon la revendication 4, **caractérisé en ce que** le dispositif d'analyse (4) et le dispositif de commande (3) sont conçus pour passer, après la deuxième phase ou, au choix, après la troisième phase, à la première phase en fonction d'un autre critère de commutation, l'autre critère de commutation étant une séquence de données prédéterminée ou une durée prédéterminée.

6. Dispositif récepteur selon l'une des revendications 1 à 5, **caractérisé en ce que**, dans une phase, la fréquence de balayage est constante.

7. Dispositif récepteur selon l'une des revendications 1 à 6, **caractérisé en ce que** la plage de fréquences de balayage d'au moins une phase comprend des fréquences de balayage variables.

8. Dispositif récepteur selon l'une des revendications 1 à 7, **caractérisé en ce que** la fréquence de balayage d'au moins une des phases est déterminée en fonction du débit de données des données modulées sur le signal porteur.

9. Dispositif récepteur selon l'une des revendications 1 à 8, **caractérisé en ce que**, dans une première phase, la fréquence de balayage se trouve entre 10 et 1000 Hz et dans une deuxième phase, se trouve entre 2 kHz et 80 kHz.

10. Dispositif récepteur selon l'une des revendications 1 à 9, **caractérisé en ce que**, au moins dans une deuxième phase, la fréquence de balayage est au moins égale au débit de données des données modulées sur le signal porteur.

11. Dispositif récepteur selon l'une des revendications 1 à 10, **caractérisé en ce que** le rapport cyclique entre les impulsions de balayage et les pauses de balayage est, dans une première phase, de 1:40.000 et, dans une deuxième phase, d'environ 1:1.250.

12. Dispositif récepteur selon l'une des revendications 1 à 11, **caractérisé en ce que** la durée des impulsions de balayage est de 100 ns au moins pour la première phase.

13. Dispositif récepteur selon l'une des revendications 1 à 12, **caractérisé en ce que** le dispositif d'analyse est conçu pour effectuer l'analyse en continu en fonction de chaque valeur de balayage mesurée lors d'une période d'activation du récepteur.

**14.** Dispositif récepteur selon l'une des revendications 1 à 13, **caractérisé en ce que** le récepteur (1) ou le dispositif d'analyse (4) comprend un comparateur (9), qui compare les signaux de réception modulés en amplitude délivrés pendant les impulsions de balayage avec une valeur seuil et génère des valeurs de balayage.

**15.** Dispositif récepteur selon l'une des revendications 1 à 14, **caractérisé en ce que** le récepteur (1) est conçu comme un récepteur superhétérodyne.

Fig. 1

RF-Signal ————————⊣|||||||||||||||||||||||||||||||||||||||||||||||||||||||⊢————————|||||||——|||||||——|||||||——|||||||——  **t**

Sample-Puls ||| | | | | | | | | | | | | | | |||||||||||||||||||||||||||||||||||||||||||||||||||||||||  **t**

Empfangs-
Modus ————————⌐ Vor-Hören
           Lansames Sampling ————————►|◄———————— Daten-Empfang
                                                    Schnelles Sampling ————————

**10**

**11**

Fig. 2

EP 2 591 557 B1

**12** Vor-Hören

Präambel nicht erkannt

Präambel erkannt

**13** Daten-Empfang I

**15** WakeUp-Code A erkannt

# Fig. 3a

EP 2 591 557 B1

Präambel
nicht erkannt

**12**

Vor-
Hören

Präambel
erkannt

Datenbits
empfangen

**13**

**14**

**15**

**16**

Daten-
Empfang
I

WakeUp-Code B
erkannt

Daten-
Empfang
II

Timer

WakeUp-Code A
erkannt

**17**

Fig. 3b

# Strom vs Anzahl der Aktivierungen pro Tag

① 0,28 µA, Aktivierungsperiode 8 Sekunden

② 0,55 µA, Aktivierungsperiode 0,8 Sekunden

# Fig. 4

$T_{ON} \ll T \ll T_B$  überabtastung
bitweiser Empfang

Fig. 5

Fig. 6

Fig. 8

Fig. 7

**EP 2 591 557 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080108318 A1
- GB 2455771 A
- US 20020173289 A1
- EP 1944873 A2
- US 20090168843 A1